# FASCICULE DE BREVET EUROPEEN

(11) **EP 3 737 547 B1**
(45) Date de publication et mention de la délivrance du brevet: **06.03.2024**
(21) Numéro de dépôt: 19703170.1
(22) Date de dépôt: 11.01.2019
(51) Int. Cl.: B29C 59/04, B29C 43/24, B29C 43/30, B29C 43/26, B29C 43/46, B29C 43/58, B29C 43/48

(54) **PROCEDE DE FABRICATION EN CONTINU D'UNE NAPPE GAUFREE ET INSTALLATION AFFERENTE**
VERFAHREN ZUR KONTINUIERLICHEN HERSTELLUNG EINER PRÄGEFOLIENBAHN UND ZUGEHÖRIGE ANLAGE
METHOD FOR CONTINUOUSLY PRODUCING AN EMBOSSED WEB, AND RELATED INSTALLATION

(30) Priorité: 12.01.2018 FR 1850266
(43) Date de publication de la demande: 18.11.2020
(73) Titulaire: F.D.S., 69730 Genay (FR)
(72) Inventeur: SERRE, Philippe, 69660 Collonges-au-Mont-d'Or (FR)
(74) Mandataire: Cabinet Didier Martin
(86) Numéro de dépôt international: PCT/FR2019/050062
(87) Numéro de publication internationale: WO 2019/138197

(56) Documents cités:
- EP-A2- 0 818 301
- JP-A- H05 309 682
- JP-A- H08 309 851
- JP-A- 2000 211 024
- US-A- 2 446 771
- US-A1- 2005 104 253

## Description

### DOMAINE TECHNIQUE

La présente invention se rapporte au domaine général des procédés de fabrication de nappes gaufrées. L'invention concerne également le domaine technique des installations de mise en oeuvre de tels procédés.

L'invention concerne plus précisément un procédé de fabrication en continu d'une nappe gaufrée à partir d'une nappe primaire préexistante d'une épaisseur supérieure à 1 mm, ladite nappe primaire comprenant au moins une couche en matériau thermoformable et présentant une face endroit et une face envers opposée, dans lequel on soumet ladite nappe primaire à une opération de gaufrage de ladite face endroit à l'aide d'un cylindre gaufreur chauffé.

L'invention concerne en outre une installation de fabrication en continu d'une nappe gaufrée à partir d'une nappe primaire préexistante d'une épaisseur supérieure à 1 mm, ladite nappe primaire comprenant au moins une couche en matériau thermoformable et présentant une face endroit et une face envers opposée, ladite installation comprenant un dispositif de gaufrage de ladite face endroit à l'aide d'un cylindre gaufreur chauffé.

### TECHNIQUE ANTERIEURE

Dans le domaine de la fabrication de nappes gaufrées, un procédé bien connu consiste à soumettre une nappe thermoformable, dont on souhaite gaufrer l'une et 1 ou l'autre des faces envers et endroit, à un effort de compression plus ou moins prolongé à l'aide d'une plaque d'embossage portant un motif négatif en relief et chauffée. Ce procédé présente cependant pour principal inconvénient de ne pas autoriser une fabrication en continu de nappes gaufrées, à partir par exemple de nappes thermoformables en rouleau, puisqu'il ne permet au mieux qu'un traitement séquentiel et discontinu de zones de ladite nappe d'une superficie correspondant aux dimensions de la plaque d'embossage employée. Par ailleurs, un tel procédé connu est de mise en oeuvre relativement lente. Egalement, il manque parfois de fiabilité et de répétabilité dans le positionnement du motif, peut engendrer des pertes de matière importantes, et provoque en outre parfois une altération indésirable de l'état de surface de la nappe gaufrée obtenue (effet de brillance, etc.).

Le document EP 0 818 301 A1 divulgue un procédé selon le préambule de la revendication n° 1 et une installation selon le préambule de la revendication n° 9.

C'est pourquoi il a été proposé un procédé alternatif consistant à soumettre en continu la nappe thermoformable à gaufrer à une opération de préchauffage suivie d'une opération de calandrage entre un cylindre gravé chauffé et un contre-cylindre.

Si ce procédé et son installation correspondante offrent globalement satisfaction, en particulier en regard du procédé discontinu « à *la plaque* » mentionné ci-avant, il s'avère cependant perfectible. En effet, si l'effet de gaufrage obtenu est satisfaisant lorsque la nappe thermoformable utilisée est de faible épaisseur, typiquement inférieure au millimètre, un certain nombre de défauts peut apparaître lorsque l'épaisseur de la nappe thermoformable est importante et dépasse le millimètre. Lorsque l'épaisseur de la nappe thermoformable dépasse le millimètre, il devient en effet nécessaire, pour obtenir un effet de gaufrage suffisamment profond à l'aide d'un tel procédé connu, d'apporter une grande quantité de calories au coeur de la nappe thermoformable lors de l'opération de préchauffage. On observe alors parfois une dégradation de l'état de surface de la nappe, et en particulier des effets de brûlure. A l'inverse, si cet apport thermique préalable est insuffisant, la déformation à coeur de la nappe sous l'effet du cylindre gaufreur est insuffisante pour garantir l'obtention d'un effet de gaufrage profond et parfaitement défini.

Les objets assignés à l'invention visent en conséquence à porter remède aux inconvénients exposés dans ce qui précède et à proposer un nouveau procédé et une nouvelle installation qui permettent la fabrication en continu de nappes gaufrées présentant un excellent effet de gaufrage à partir de nappes thermoformables de forte épaisseur, durable et bien marqué, sans dégradation de l'état de surface de ces dernières.

Un autre objet de l'invention vise à proposer un nouveau procédé et une nouvelle installation qui permettent la fabrication en continu de nappes gaufrées présentant un motif gaufré particulièrement profond et bien défini.

Un autre objet de l'invention vise à proposer un nouveau procédé et une nouvelle installation qui permettent la fabrication en continu de nappes gaufrées à partir de nappes thermoformables de nature et composition très variées.

Un autre objet de l'invention vise à proposer un nouveau procédé et une nouvelle installation, qui permettent de fabriquer des nappes gaufrées en continu, à une cadence satisfaisante et pour un coût de revient maîtrisé.

### EXPOSE DE L'INVENTION

Les objets assignés à l'invention sont atteints à l'aide d'un procédé de fabrication en continu d'une nappe gaufrée à partir d'une nappe primaire préexistante d'une épaisseur supérieure à 1 mm, ladite nappe primaire comprenant au moins une couche en matériau thermoformable et présentant une face endroit et une face envers opposée, dans lequel on soumet ladite nappe primaire à une opération de gaufrage de ladite face endroit à l'aide d'un cylindre gaufreur chauffé, ledit procédé étant caractérisé en ce que ladite opération de gaufrage comprend au moins une première étape de compression de ladite face endroit de la nappe primaire en contact avec la surface dudit cylindre gaufreur chauffé sur au moins une portion du périmètre de ce dernier à l'aide d'une bande de compression en contact surfacique avec ladite face envers de la nappe primaire, ladite opération de gaufrage comprenant une deuxième étape de compression de ladite nappe primaire entre ledit cylindre gaufreur et un contre-cylindre presseur principal, ladite deuxième étape de compression étant immédiatement consécutive à ladite première étape de compression, lesdites première et deuxièmes étapes de compression étant respectivement réalisées à une première pression et à une deuxième pression prédéfinies, ladite deuxième pression étant supérieure ou égale à ladite première pression.

Les objets assignés à l'invention sont également atteints à l'aide d'une installation de fabrication en continu d'une nappe gaufrée à partir d'une nappe primaire préexistante d'une épaisseur supérieure à 1 mm, ladite nappe primaire comprenant au moins une couche en matériau thermoformable et présentant une face endroit et une face envers opposée, ladite installation comprenant un dispositif de gaufrage de ladite face endroit à l'aide d'un cylindre gaufreur chauffé, ladite installation étant caractérisée en ce que ledit dispositif de gaufrage comprend une bande de compression conçue et agencée pour venir en contact surfacique avec ladite face envers de la nappe primaire et exercer un premier effort de compression, correspondant à une première pression prédéfinie, de ladite face endroit en contact avec la surface dudit cylindre gaufreur chauffé sur au moins une portion du périmètre de ce dernier, ledit dispositif de gaufrage comprenant un contre-cylindre presseur principal positionné en aval dudit contact surfacique et conçu et agencé pour exercer un deuxième effort de compression, correspondant à une deuxième pression prédéfinie, de ladite nappe primaire entre ledit cylindre gaufreur et ledit contre-cylindre presseur principal, ladite deuxième pression étant supérieure ou égale à ladite première pression.

### DESCRIPTIF SOMMAIRE DES DESSINS

D'autres objets et avantages de l'invention apparaîtront mieux à la lecture de la description qui suit, ainsi qu'à l'aide de la figure annexée, donnée à titre purement illustratif et non limitatif, et qui illustre de manière schématique un mode de réalisation préférentiel de l'installation selon l'invention, laquelle installation est préférentiellement destinée à la mise en ceuvre du procédé selon l'invention.

### MEILLEURE MANIERE DE REALISER L'INVENTION

Selon un premier aspect, l'invention concerne un procédé de fabrication d'une nappe gaufrée 2 à partir d'une nappe primaire 3 préexistante, c'est-à-dire à partir d'une nappe pré-construite, solide, avec une tenue mécanique propre, de composition et de nature préférentiellement identiques à celles de la nappe gaufrée 2 obtenue.

De manière générale, le terme « *nappe* » renvoie préférentiellement, dans le contexte de l'invention, à un ensemble surfacique, c'est-à-dire de grande longueur, de section large et d'épaisseur globalement uniforme mais faible par rapport à la largeur et à la longueur, et doté avantageusement d'une tenue mécanique propre.

Présentant une face endroit 3A et une face envers 3B opposée, la nappe primaire 3 concernée par le procédé selon l'invention est d'une épaisseur supérieure (ou égale) à 1 mm, et de préférence supérieure à 1,5 mm. De préférence, cette épaisseur sera considérée comme la distance moyenne (mesurée par exemple à l'aide d'un pied à coulisse) qui sépare lesdites faces endroit 3A et envers 3B de la nappe primaire 3 lorsque celle-ci se trouve à plat et au repos, en l'absence de tout effort de compression particulier exercé sur la nappe primaire 3 et à température ambiante. De préférence, ladite nappe primaire 3 est une nappe surfacique souple, c'est-à-dire qu'elle est sensiblement dépourvue de rigidité propre. Plus spécifiquement et avantageusement, ladite nappe primaire 3 se présente sous la forme d'une bande longue dotée d'une souplesse et d'une flexibilité suffisantes pour qu'elle puisse être enroulée en bobine ou repliée sur elle-même.

Le procédé selon l'invention est un procédé de fabrication en continu. Il s'agit ainsi avantageusement d'un procédé industriel, préférentiellement automatisé, autorisant le traitement sensiblement ininterrompu de grandes dimensions, et en particulier de grandes longueurs, d'une nappe primaire 3 donnée.

En d'autres termes, le procédé de l'invention consiste ainsi à former en continu un motif en relief, d'amplitude (profondeur) plus ou moins prononcée, à la surface d'une nappe primaire 3, laquelle est de forte épaisseur en comparaison, par exemple, d'une nappe primaire 3 qui serait formée d'une étoffe textile classique, telle que du tissu ou une feuille de papier, dont l'épaisseur est généralement bien inférieure à 1 mm.

Selon l'invention, ladite nappe primaire 3 comprend au moins une couche en matériau thermoformable, c'est-à-dire une couche formée d'un matériau susceptible de subir une déformation à chaud, en particulier selon la direction de l'épaisseur de ladite couche, et de conserver après refroidissement l'état déformé qui lui a été conféré. C'est ainsi la déformation à chaud de cette couche en matériau thermoformable qui conférera (ou contribuera au moins à conférer) un effet de gaufrage à la nappe obtenue à l'issue du procédé selon l'invention. De préférence, ledit matériau thermoformable de la nappe primaire 3 est une mousse (matériau cellulaire solide), de préférence compressible (par exemple une mousse souple de polyuréthane ou de polyéthylène), ou un matériau non-tissé, aiguilleté ou non. Typiquement, la température de ramollissement ou de fusion dudit matériau thermoformable est comprise entre 80 et 250°C.

De manière préférentielle, ladite nappe primaire 3 est une nappe multicouche, c'est-à-dire qu'elle est formée d'un assemblage par empilement d'une pluralité de couches surfaciques distinctes les unes des autres, ces couches s'étendant de préférence selon des plans respectifs sensiblement parallèles les uns aux autres. Avantageusement, les différentes couches qui composent alors la nappe primaire sont préférentiellement de nature ou de propriétés différentes, de sorte que la nappe primaire 3 forme avantageusement un complexe. De manière plus préférentielle encore, la nappe primaire 3 pourra ainsi comprendre, outre ladite couche en matériau thermoformable, au moins une couche textile. Ainsi, ladite nappe primaire 3 pourra donc par exemple former un complexe mousse / textile. Cette couche textile, en tant que telle, n'est pas nécessairement thermoformable.

Ladite couche textile, ou étoffe, pourra être tissée ou non-tissée (par exemple non-tissée thermofusible), synthétique ou bien naturelle. En particulier, elle pourra être obtenue par tout procédé connu, et par exemple par tricotage, par tissage, par voie papetière (étoffe non-tissée « *wet laid* ») ou encore par voie sèche selon un procédé aérodynamique (étoffe non-tissée « *air laid* ») de fibres ou de fils naturel(le)s (coton, lin, laine, soie, cellulose, etc.), synthétiques (polyester, polyamide, aramide, verre, carbone, inox, etc.), ou encore d'un mélange de telles fibres (ou fils) naturelles ou synthétiques. Avantageusement, ladite couche textile pourra alors former une couche superficielle de ladite nappe primaire 3, et de préférence la face endroit 3A de cette dernière, tandis que ladite couche en matériau thermoformable formera la face envers 3B ou une couche interne de la nappe primaire 3.

Alternativement, ou de manière complémentaire, la nappe primaire 3 pourra comprendre, outre ladite couche en matériau thermoformable, une couche non textile formée, par exemple, d'une feuille plastique ou métallique souple.

Pour obtenir ladite nappe gaufrée 2 selon le procédé de l'invention, on soumet la nappe primaire 3 à une opération de gaufrage de la face endroit 3A de la nappe primaire 3 à l'aide d'un cylindre gaufreur 5 chauffé, ce dernier étant en rotation, de préférence à une vitesse prédéfinie et constante. La surface du cylindre gaufreur 5 est pourvue d'un motif gravé en négatif, et elle est portée et maintenue en température à l'aide de tout moyen connu. De préférence, la température de la surface du cylindre gaufreur 5, au cours de ladite opération de gaufrage, est inférieure ou égale à la température de ramollissement ou de fusion dudit matériau thermoformable de la couche primaire 3, et de préférence encore comprise entre 50 C et 250°C.

Plus spécifiquement, l'opération de gaufrage du procédé selon l'invention comprend au moins une première étape de compression de la face endroit 3A de la nappe primaire 3 en contact avec la surface dudit cylindre gaufreur 5, sur au moins une portion Pc du périmètre de ce dernier, à l'aide d'une bande 6 (ou tapis) de compression qui est en contact surfacique avec la face envers 3B de la nappe primaire 3.

On entend ici de préférence par « *périmètre »,* le périmètre externe du cylindre gaufreur 5, mesuré au niveau des crêtes du motif gravé à sa surface. De préférence suffisamment flexible pour pouvoir être enroulée partiellement autour du cylindre gaufreur 5, ladite bande de compression 6 est positionnée en regard de la surface dudit cylindre gaufreur 5 pour faire face à une portion, non négligeable, du périmètre de ce dernier. Au cours de ladite première opération de compression, ladite bande de compression 6 vient donc en contact surfacique (de préférence continu) avec la face envers 3B de la nappe primaire 3, de sorte que la nappe primaire 3 est interposée entre le cylindre gaufreur 5 et la bande de compression 6 au cours de ladite première étape de compression. Au cours de la première étape de compression de l'opération de gaufrage du procédé selon l'invention, on vient ainsi mettre en contact et plaquer sous pression une certaine superficie de la face endroit 3A de la nappe primaire 3 contre la surface gravée et chaude du cylindre gaufreur 5 à l'aide de ladite bande de compression 6, la nappe primaire 3 et la bande de compression 6 venant conjointement s'enrouler partiellement autour du cylindre gaufreur 5.

Contrairement à une opération de gaufrage classique par calandrage, dans laquelle une nappe primaire vient en contact quasi-linéaire avec un cylindre gaufreur, l'opération de gaufrage du procédé selon l'invention comprend ainsi une première étape de compression qui peut avantageusement être qualifiée d'étape de compression *« surfacique ».*

L'invention repose ainsi sur la mise en oeuvre d'une compression surfacique de la nappe primaire 3 contre le cylindre gaufreur 5 avec une pression suffisante pour réaliser un gaufrage de la nappe primaire 3, c'est-à-dire une pression suffisante pour obtenir les motifs en relief souhaités. La pression mise en oeuvre par la bande de compression 6 est donc suffisamment élevée pour impartir à la nappe primaire 3 un motif en relief (gaufrage) sur sa face endroit 3A, de sorte qu'elle se distingue d'une pression visant par exemple un simple lustrage de la face envers.

Avantageusement, la bande de compression 6 défile à la même vitesse que la nappe primaire 3 et que la surface gravée du cylindre gaufreur 5. De préférence, la bande de compression 6 présente une largeur supérieure ou égale à la largeur de la nappe primaire 3 considérée. De manière préférentielle, ladite bande de compression 6 est une bande continue, c'est-à-dire sans fin, refermée sur elle-même, ce qui facilite la mise en oeuvre continue du procédé de l'invention. La face de la bande de compression destinée à venir en contact de compression avec la nappe primaire 3 est de préférence sensiblement lisse, mais peut alternativement présenter des creux et reliefs pour imprimer une texture spécifique à la face envers 3B.

Selon une variante, la bande de compression 6 est une bande conductrice thermique, pour autoriser un échange thermique à travers ladite bande de compression 6, en particulier au cours de ladite première étape de compression, et plus particulièrement encore dans le cas préférentiel, qui sera exposé ci-après, où le procédé selon l'invention comprend une étape de chauffage de la bande de compression 6. De préférence, la bande de compression 6 est une bande métallique, avantageusement en acier, et de manière plus avantageuse encore en acier allié. Selon une variante alternative, ladite bande de compression 6 est une bande thermiquement isolante, c'est-à-dire qu'elle présente une faible conductivité thermique, afin de limiter au contraire la déperdition de chaleur par la face envers 3B de la nappe primaire 3 au cours de ladite première étape de compression. La bande de compression 6 pourra alors par exemple être réalisée par tissage ou aiguilletage de fibres minérales et / ou organiques adaptées aux propriétés de conductivité thermique et de résistance mécaniques recherchées.

De préférence, ladite portion Pc du périmètre dudit cylindre gaufreur 5, sur laquelle la face endroit 3A de la nappe primaire 3 est mise en contact avec la surface du cylindre gaufreur 5, est définie par un angle θ d'arc du cylindre gaufreur 5 compris entre environ 72° et environ 288° (*i.e.* une portion Pc du périmètre comprise entre environ 1/5 et environ 415 du périmètre dudit cylindre gaufreur 5). De préférence encore, ladite portion Pc du périmètre dudit cylindre gaufreur 5 est définie par un angle θ d'arc du cylindre gaufreur 5 au moins égal à environ 90° (soit environ 114 du périmètre) et, de manière plus préférentielle encore, environ égal à 270° (soit environ 3/4 du périmètre).

Pour un diamètre de cylindre gaufreur donné, la première étape de compression du procédé selon l'invention met ainsi en oeuvre une première zone de compression de la nappe primaire 3 entre ledit cylindre gaufreur 5 et ladite bande de compression 6 dont la largeur est bien plus étendue que la zone de compression généralement mise en oeuvre dans le cas d'un procédé de gaufrage par calandrage classique. Cette largeur de zone de compression est ici à considérer comme étant la dimension de la zone de compression dans la direction de défilement de la nappe primaire 3. Par exemple, pour un cylindre gaufreur d'un diamètre de 700 mm, la première zone de compression mise en œuvre lors de la première étape de compression du procédé selon l'invention pourra avantageusement présenter une largeur comprise entre environ 440 et environ 1 760 mm (contre en général moins de 30 mm pour un procédé de gaufrage par calandrage classique).

Corrélativement, à vitesses de rotation du cylindre gaufreur comparables, ladite première étape de compression autorise un temps de contact et de compression de la nappe primaire 3 contre la surface gravée et chaude du cylindre gaufreur 5 qui est significativement plus élevé que le temps de contact offert par un procédé de gaufrage par calandrage classique (typiquement inférieur à la seconde, voire même au dixième de seconde). Avantageusement, ladite première étape de compression, et donc la mise en contact et en compression d'un point donné de ladite nappe primaire 3 avec le cylindre gaufreur 5, est réalisée sur une durée au moins égale à 1 s, et de préférence supérieure ou égale à 5 s.

Avantageusement, en un point donné de ladite première zone de compression, la bande de compression 6 exerce un premier effort de compression, correspondant à une première pression P1 prédéfinie, de la nappe primaire 3 en contact avec la surface du cylindre gaufreur 5, qui est prédéfini et sensiblement constant. De préférence, ladite première étape de compression est ainsi réalisée à une première pression P1, prédéfinie, qui est avantageusement comprise entre 150 et 3 000 daN / m². Ladite première pression P1 est préférentiellement à considérer ici comme une valeur moyenne de la pression exercée par la bande de compression 6 à l'encontre de nappe primaire 3 au niveau de ladite première zone de compression.

Bien évidemment, la durée de ladite première étape de compression, ainsi que ladite première pression P1 moyenne, pourront avantageusement être choisies, modulées, selon l'épaisseur et la nature de la nappe primaire 3 considérée (et en particulier de sa couche en matériau thermoformable), et selon l'amplitude de l'effet de gaufrage que l'on souhaite conférer à la nappe primaire 3.

On comprend donc de ce qui précède qu'au cours de ladite première étape de compression de l'opération de gaufrage du procédé selon l'invention, la nappe primaire 3 est ainsi soumise simultanément à un champ de force de compression et à un flux thermique importants, avantageusement maîtrisés et continus, et ce pendant un temps de contact avec le cylindre gaufreur 5 relativement important, typiquement supérieur à 1 s et, de préférence, supérieur ou égal à 5 s. On favorise ainsi un transfert thermique particulièrement homogène et continu à travers toute l'épaisseur de la nappe primaire 3 (et en particulier à coeur de sa couche en matériau thermoformable), à mesure que le motif gravé à la surface du cylindre gaufreur 5 est transféré à la face endroit 3A de la nappe primaire 3. On obtient ainsi avantageusement une nappe gaufrée 2 présentant un effet de gaufrage particulièrement bien marqué et durable, et un état de surface sensiblement homogène. En particulier, il a été observé que ladite première opération de compression permet de limiter et même de supprimer totalement les effets de brûlures, ainsi que de garantir une excellente planéité moyenne de la face envers de la nappe gaufrée 2 obtenue.

Afin d'améliorer la profondeur et la définition des motifs gaufrés réalisés, l'opération de gaufrage du procédé selon l'invention comprend de préférence une deuxième étape de compression de ladite nappe primaire 3 entre le cylindre gaufreur 5 et un contre-cylindre presseur 13 (ou contre-cylindre principal 13). Distincte de ladite première étape de compression, et avantageusement réalisée après cette dernière, ladite deuxième étape de compression correspond avantageusement à une opération complémentaire de gaufrage par calandrage, qui favorise la consolidation de l'effet de gaufrage imparti à la nappe primaire 3 par le cylindre gaufreur 5 lors de la première étape de compression. A la différence de la première étape de compression, cette deuxième étape de compression consiste ainsi avantageusement en l'exercice d'un deuxième effort de compression localisé de la nappe primaire 3, entre les zones de contact respectives du cylindre gaufreur 5 et du contre-cylindre presseur principal 13 principal avec cette dernière, c'est-à-dire en la mise en oeuvre d'une deuxième zone de compression de largeur relativement faible (de préférence, de l'ordre de 1 à 30 mm). On pourra ainsi avantageusement qualifier ladite deuxième étape de compression d'étape de compression « *linéaire* » ou « *quasi-linéaire ».* De préférence, ledit deuxième effort de compression est exercé selon une direction normale à ladite nappe primaire 3. Optionnellement, le contre-cylindre presseur principal 13 pourra être pourvu à sa surface d'un revêtement en matériau souple, par exemple en élastomère, de manière notamment à optimiser la largeur de la deuxième zone de compression formée entre le cylindre gaufreur 5 et le contre-cylindre presseur principal 13, et à favoriser la transmission des efforts mécaniques.

Avantageusement, cette deuxième étape de compression est immédiatement consécutive à la première étape de compression, et finalise de préférence ladite opération de gaufrage. De préférence, au cours de ladite deuxième étape de compression, ladite bande de compression 6 est interposée entre le cylindre gaufreur 5 et le contre-cylindre presseur principal 13. Ainsi, ladite deuxième étape de compression est avantageusement réalisée tandis que la nappe primaire 3 est toujours maintenue plaquée contre le cylindre gaufreur 5 par la bande de compression 6, de sorte que le contre-cylindre presseur principal 13 exerce ledit deuxième effort de compression sur la nappe primaire 3 et sur la bande de compression 6 en contact surfacique avec cette dernière. Ladite deuxième étape de compression pourra cependant éventuellement être réalisée avant la fin (mais de préférence toutefois au voisinage de la fin) de ladite première étape de compression, c'est-à-dire de manière simultanée, combinée, à la première étape de compression. Il a en effet été observé qu'une telle juxtaposition (ou éventuellement superposition) desdites première et deuxième étapes de compression permet avantageusement d'éviter, entre ces deux étapes de compression, toute discontinuité brusque des conditions de pression et de flux thermique auxquelles est soumise la nappe primaire 3 au cours de l'opération de gaufrage. On limite ainsi l'apparition de défauts structurels et visuels que de telles variations importantes et rapides de pression ou de température entre lesdites première et deuxième étapes de compression pourraient engendrer.

Avantageusement, ladite deuxième étape de compression est respectivement réalisée à une deuxième pression P2 prédéfinie et préférentiellement maintenue constante dans le temps. De préférence, ladite deuxième pression P2 est définie et régulée par l'application d'un effort exercé par un vérin (ou tout autre moyen connu) sur l'axe dudit contre-cylindre presseur principal 13 selon une direction normale à la surface du cylindre gaufreur 5. De préférence, ladite deuxième pression P2 est supérieure ou au moins égale à la première pression P1 à laquelle est réalisée ladite première étape de compression. De manière encore plus préférentielle, ladite deuxième pression P2 est strictement supérieure, voire très supérieure (par exemple, entre 20 et 1 000 fois supérieure), à ladite première pression P1. En effet, il a été observé qu'une telle caractéristique est particulièrement bénéfique pour la définition de l'effet de gaufrage. Bien évidemment, lesdites première et deuxième pressions pourront avantageusement être choisies et modulées selon notamment l'épaisseur ou la nature de la nappe primaire 3 à gaufrer, ou encore selon l'amplitude de l'effet de gaufrage recherché.

Optionnellement, l'opération de gaufrage du procédé selon l'invention pourra comprendre, avant ladite première étape de compression, une étape de pré-compression de la nappe primaire 3 entre le cylindre gaufreur 5 et un contre-cylindre presseur (distinct du contre-cylindre presseur principal 13 destiné à la mise en oeuvre de la deuxième étape de compression). Comme on le verra ci-après, ce contre-cylindre presseur pour la réalisation de ladite étape de pré-compression pourra être confondu avec un cylindre d'amenée 8 de la bande de compression 6. Il constituera alors avantageusement un contre-cylindre d'entrée. Cette étape de pré-compression consiste ainsi avantageusement en l'exercice d'un effort de pré-compression localisé de la nappe primaire 3, entre les zones de contact respectives du cylindre gaufreur 5 et du contre-cylindre presseur d'entrée avec cette dernière (compression « *linéaire »* ou *« quasi-linéaire* »). Ladite étape de pré-compression correspond avantageusement à une opération de pré-gaufrage par calandrage, qui marque avantageusement le début de ladite opération de gaufrage de la nappe primaire 3. De préférence, ledit effort de pré-compression est exercé selon une direction normale à ladite nappe primaire 3. De préférence, au cours de ladite étape de pré-compression, ladite bande de compression 6 est interposée entre le cylindre gaufreur 5 et ledit contre-cylindre presseur d'entrée.

Avantageusement, ladite étape de pré-compression est réalisée à une pression P3 prédéfinie, et préférentiellement maintenue constante dans le temps.

Optionnellement, le contre-cylindre presseur d'entrée destiné à la mise en oeuvre de l'étape de pré-compression pourra être pourvu à sa surface d'un revêtement en matériau souple, par exemple en élastomère, de manière notamment à optimiser la largeur de la zone de pré-compression formée entre le cylindre gaufreur 5 et le contre-cylindre presseur d'entrée, et à favoriser la transmission des efforts mécaniques.

De préférence, dans le cas où la bande de compression 6 est une bande conductrice thermique, le procédé selon l'invention comprend une étape de chauffage de la bande de compression 6 pour assurer, au cours de ladite première étape de compression, un apport thermique à la nappe primaire 3 par la face envers 3B par l'intermédiaire de la bande de compression 6. On assure ainsi avantageusement, au cours de la première étape de compression, un apport thermique à la nappe primaire 3 à la fois par la face envers 3B par l'intermédiaire de la bande de compression 6, et par la face endroit 3A par l'intermédiaire du cylindre gaufreur 5 chauffé. Ladite étape de chauffage de la bande de compression 6 est donc concomitante, simultanée, à ladite première étape de compression. De manière encore plus préférentielle, ladite étape de chauffage de la bande de compression 6 est réalisée à l'aide d'un dispositif de chauffage 14 (par exemple de type chauffage radiant à infrarouges) positionné derrière ladite bande de compression 6, en regard de ladite portion Pc de périmètre du cylindre gaufreur 5 contre laquelle est mise en contact et en compression la nappe primaire 3 au cours de la première étape de compression. On assure ainsi, au cours de ladite première étape de compression, un apport thermique complémentaire à ladite nappe primaire 3, par sa face envers 3B, sensiblement homogène et préférentiellement continu sur toute la portion de la nappe primaire 3 qui est en contact avec le cylindre gaufreur 5. Un tel apport thermique complémentaire peut s'avérer particulièrement intéressant dans le cas où la nappe primaire 3 est particulièrement épaisse et / ou comprend une couche en matériau thermoformable de très faible conductivité thermique (par exemple une mousse de polyuréthane).

Typiquement, ladite étape de chauffage de la bande de compression 6 vise à porter cette dernière à une température comprise entre 50 et 350°C. Eventuellement, ladite bande de compression 6 pourra, au cours de ladite étape de chauffage, être portée et maintenue à une température supérieure à la température de la surface du cylindre gaufreur 5.

Avantageusement, ladite étape de chauffage de la bande de compression 6 pourra être précédée d'une opération de préchauffage de celle-ci, par exemple à l'aide d'un dispositif de préchauffage 15 de type premier dispositif radiant 16, afin de faciliter l'atteinte de la température souhaitée de la bande de compression 6 dès le début de la première étape de compression.

Avantageusement, le procédé selon l'invention peut comprendre, avant ladite première étape de compression, une étape de préchauffage de ladite nappe primaire 3. Au cours de cette étape de préchauffage de ladite nappe primaire 3, cette dernière est préférentiellement portée à une température préférentiellement inférieure ou égale à la température de ramollissement ou de fusion (et donc à une température préférentiellement inférieure ou égale à la température de dégradation) du matériau thermoformable de ladite nappe primaire 3. Typiquement, ladite étape de préchauffage de ladite nappe primaire 3 est conduite à une température comprise entre 50 et 220°C. Par exemple réalisée par passage de la nappe primaire 3 en regard d'un dispositif de préchauffage 17 de type deuxième dispositif radiant 18 positionné en amont dudit cylindre gaufreur 5, ladite étape de préchauffage précède alors de préférence immédiatement ladite première étape de compression, de manière à favoriser au maximum la continuité de l'apport thermique à la nappe primaire 3 entre ladite étape de préchauffage et ladite première étape de compression. Selon l'importance de l'épaisseur de la nappe primaire 3, une telle étape de préchauffage de cette dernière permet avantageusement de conserver des cadences de fabrication satisfaisantes.

Selon les applications visées (nature et épaisseur de la nappe primaire, profondeur de l'effet de gaufrage recherché, etc.), ladite étape de préchauffage de la nappe primaire 3 pourra avantageusement compléter ou remplacer l'étape de préchauffage de la bande de compression 6 envisagée ci-avant.

L'invention concerne également, en tant que telle, une installation 1 de fabrication en continu d'une nappe gaufrée 2. L'installation 1 en question est avantageusement une installation permettant la mise en oeuvre d'un procédé de fabrication en continu d'une nappe gaufrée 2 conforme à l'invention, de sorte que la description exposée dans ce qui précède en relation avec le procédé selon l'invention reste valable et applicable, *mutatis mutandis,* à la présente installation 1.

Conformément à l'invention, ladite installation 1 est conçue pour permettre la fabrication en continu d'une nappe gaufrée 2 à partir d'une nappe primaire 3 préexistante d'une épaisseur supérieure à 1 mm, ladite nappe primaire 3 comprenant au moins une couche en matériau thermoformable et présentant une face endroit 3A et une face envers 3B opposée, tel que décrit précédemment en lien avec le procédé selon l'invention. Il s'agit préférentiellement d'une installation industrielle, avantageusement automatisée, conçue pour traiter de manière sensiblement ininterrompue de grandes dimensions d'une nappe primaire donnée.

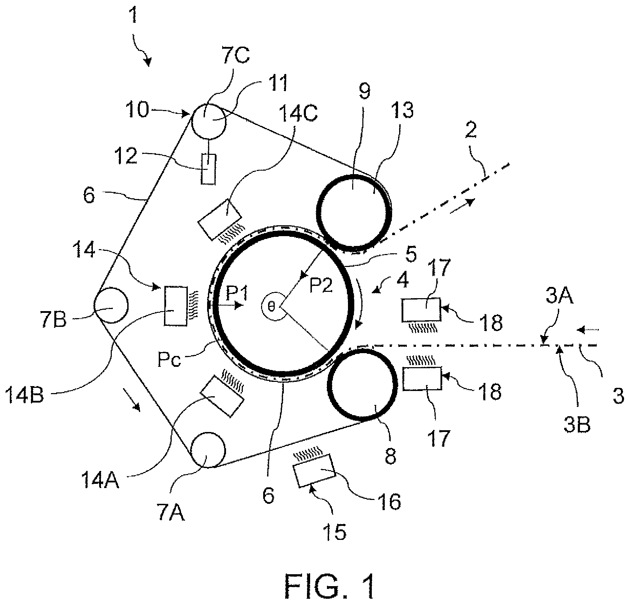

Un mode de réalisation particulièrement préférentiel de l'installation 1 selon l'invention est illustré de manière schématique à la figure 1. Les flèches présentes sur la figure 1 indiquent le sens préférentiel de progression de la nappe primaire 3 et de la nappe gaufrée 2 obtenue à partir de cette dernière, relativement aux différents dispositifs et autres composants de ladite installation 1. Les termes *« amont »* et *« aval »* utilisés dans la présente description sont préférentiellement à interpréter en considération du sens de progression indiqué par ces flèches (et indépendamment du positionnement relatif dans l'espace de l'un ou l'autre desdits dispositifs ou composants).

Conformément à l'invention, ladite installation 1 comprend un dispositif de gaufrage 4 de la nappe primaire 3, et en particulier de la face endroit 3A de cette dernière, à l'aide d'un cylindre gaufreur 5 chauffé (c'est-à-dire chauffant). Ledit cylindre gaufreur 5 est avantageusement métallique, par exemple en acier, avec ou sans traitement de surface. Le diamètre du cylindre gaufreur 5 est typiquement compris entre 200 et 1 000 mm.

De préférence, le cylindre gaufreur 5 est pourvu d'un système de chauffage interne (non illustré) pour porter la surface dudit cylindre gaufreur 5 à une température prédéfinie, préférentiellement comprise entre 50 C et 250°C. Avantageusement, ladite installation 1 comprend également un système de contrôle et de régulation (non illustré) de la température de la surface du cylindre gaufreur 5.

Comme évoqué ci-avant en lien avec le procédé selon l'invention, le cylindre gaufreur 5 est par ailleurs pourvu à sa surface d'un motif gravé en négatif, dont l'aspect général n'est pas spécifiquement limité, et dont la profondeur moyenne est typiquement comprise entre 1 et 50 mm. De préférence, ledit cylindre gaufreur 5 est amovible et interchangeable, afin d'en assurer une maintenance aisée ou un remplacement, par exemple par un cylindre gaufreur 5 de diamètre différent et / ou portant à sa surface un motif gravé différent.

Outre ledit cylindre gaufreur 5, ledit dispositif de gaufrage 4 de l'installation 1 selon l'invention comprend une bande de compression 6. Positionnée en regard dudit cylindre gaufreur 5, et en particulier en regard d'une portion de la surface de ce dernier, ladite bande de compression 6 est conçue et agencée pour venir en contact surfacique avec ladite face envers 3B de la nappe primaire 3 et exercer un premier effort de compression de ladite face endroit 3A en contact avec la surface dudit cylindre gaufreur 5 chauffé sur au moins une portion Pc du périmètre de ce dernier. Ladite bande de compression 6 est ainsi avantageusement destinée à permettre la mise en oeuvre de la première étape de compression du procédé selon l'invention, telle que celle-ci a été décrite en détail ci-avant.

Telle que précédemment décrite en lien avec le procédé selon l'invention, ladite bande de compression 6 est une bande avantageusement flexible, de sorte à ce qu'elle puisse s'enrouler au moins partiellement autour du cylindre gaufreur 5, et à faire ainsi face à une portion, non négligeable, du périmètre de ce dernier. De préférence, ladite bande de compression 6 est une bande continue, c'est-à-dire sans fin, refermée sur elle-même, ce qui permet de faciliter la conception de l'installation 1 et d'en maîtriser l'encombrement.

Selon une variante, la bande de compression 6 est une bande conductrice thermique, et par exemple une bande métallique, avantageusement en acier, et de manière plus avantageuse encore en acier allié. Selon une variante alternative, ladite bande de compression est au contraire une bande thermiquement isolante, c'est-à-dire qu'elle présente une faible conductivité thermique. Comme envisagé ci-avant, la bande de compression 6 pourra alors par exemple être réalisée par tissage ou aiguilletage de fibres minérales et / ou organiques adaptées.

Préférentiellement, la bande de compression 6 est amovible et interchangeable, afin d'en assurer une maintenance aisée ou un remplacement. En outre, la bande de compression 6 pourra avantageusement avoir reçu un traitement de surface spécifique, notamment pour limiter le risque d'adhésion de la face envers 3B de la nappe primaire 3 (par exemple, par dépôt d'un film d'un matériau anti-adhérant, tel que du PFTE ou autre) et / ou, le cas échéant, pour en améliorer les propriétés thermiques.

Tel qu'illustré, ladite bande de compression 6 est préférentiellement supportée et guidée par une pluralité de cylindres de détours 7A, 7B, 7C, dont la position relative est avantageusement réglable. Avantageusement, ladite bande de compression 6 est maintenue partiellement enroulée autour dudit cylindre gaufreur 5, sur la longueur de ladite portion Pc du périmètre de ce dernier, à l'aide d'un cylindre d'amenée 8 et d'un cylindre de renvoi 9. Le cylindre d'amenée 8 et / ou le cylindre de renvoi 9, ainsi qu'éventuellement les cylindres de détours 7A, 7B, 7C, pourront être avantageusement pourvus à leur surface d'un revêtement en matériau souple, par exemple en élastomère.

L'installation 1 selon l'invention étant destinée au traitement d'une nappe primaire 3 préexistante d'une épaisseur importante, et en particulier supérieure (ou égale) à 1 mm, ladite bande de compression 6 et ledit cylindre gaufreur 5 sont agencés l'un relativement à l'autre de sorte à autoriser l'interposition de la nappe primaire 3 entre la bande de compression 6 et la surface du cylindre gaufreur 5, lorsque lesdites nappe primaire 3 et bande de compression 6 sont enroulées autour dudit cylindre gaufreur 5, le long de ladite portion Pc de périmètre de ce dernier.

De préférence, la longueur de ladite portion Pc du périmètre du cylindre gaufreur 5 est prédéfinie et réglable. Tel que cela ressort de la figure annexée, ladite portion Pc est avantageusement définie par la position et l'écartement relatif du cylindre d'amenée 8 et du cylindre de sortie 9 le long du pourtour du cylindre gaufreur 5. Plus spécifiquement et avantageusement, ladite portion Pc du périmètre dudit cylindre gaufreur 5 est avantageusement définie par un angle d'arc θ du cylindre gaufreur 5 compris entre environ 72° et environ 288° (soit entre 1/5 et 415 du périmètre dudit cylindre gaufreur 5). De préférence, ladite bande de compression 6 est agencée en regard dudit cylindre gaufreur 5 et suit le contour de ce dernier sur au moins le quart, et de préférence encore sur les trois-quarts, du périmètre dudit cylindre gaufreur 5 (ce qui correspond à un angle d'arc θ supérieur ou égal à 90°, et de préférence égal à 270°). Tel qu'introduit précédemment en lien avec le procédé de l'invention, un tel agencement de la bande de compression 6 permet avantageusement de ménager entre cette dernière et le cylindre gaufreur 5 une première zone de compression particulièrement étendue, d'une largeur avantageusement comprise entre 440 et 1 760 mm, selon notamment le diamètre du cylindre gaufreur 5 choisi.

Avantageusement, l'installation 1 comprend un premier dispositif de contrôle et de régulation 10 de l'intensité dudit premier effort de compression, correspondant à ladite première pression P1 moyenne, exercé par la bande de compression. De préférence, le premier dispositif de contrôle et de régulation 10 est conçu pour contrôler et réguler la tension de la bande de compression 6. Selon le mode de réalisation préférentiel illustré, ledit premier dispositif de contrôle et de régulation 10 comprend avantageusement un cylindre tenseur 11, éventuellement confondu avec l'un desdits cylindres de détours 7A, 7B, 7C, et dont la position est de préférence commandée par un actionneur de type vérin 12.

De préférence, ledit dispositif de gaufrage 4 comprend un contre-cylindre presseur 13 (ou contre-cylindre principal 13) conçu et agencé pour exercer un deuxième effort de compression, correspondant avantageusement à une deuxième pression P2 prédéfinie, de ladite nappe primaire 3 entre ledit cylindre gaufreur 5 et ledit contre-cylindre presseur principal 13. Avantageusement, ledit contre-cylindre presseur principal 13 est destiné à permettre la mise en oeuvre de la deuxième étape de compression du procédé selon l'invention, telle que décrite ci-avant. Typiquement, le diamètre dudit contre-cylindre presseur principal 13 pourra être avantageusement compris entre 100 et 500 mm. De préférence, le contre-cylindre presseur principal 13 est conçu pour exercer ledit deuxième effort de compression selon une direction normale à ladite nappe primaire 3.

De préférence, ledit contre-cylindre presseur principal 13 est positionné en aval dudit contact surfacique, c'est-à-dire en aval dudit cylindre gaufreur 5 et de la première zone de compression formée entre la bande de compression 6 et le cylindre gaufreur 5. Plus précisément et conformément au mode de réalisation illustré aux figure, ledit contre-cylindre presseur principal 13 est avantageusement positionné immédiatement en aval dudit contact surfacique, de façon à ce que ledit deuxième effort de compression correspondant à la pression P2 s'exerce de façon immédiatement consécutive au premier effort de compression correspondant à la pression P1, ce qui permet en particulier d'éviter toute reprise de gonflement intempestive, par retour élastique, de ladite nappe primaire, pour un résultat final optimal sur le plan dimensionnel et esthétique.

De manière avantageuse, tel qu'illustré, ledit contre-cylindre presseur principal 13 est agencé pour exercer ledit deuxième effort de compression de ladite nappe primaire 3 entre le cylindre gaufreur 5 et le contre-cylindre presseur principal 13, ladite bande de compression 6 étant interposée entre le cylindre gaufreur 5 et le contre-cylindre presseur principal 13. Comme évoqué ci-avant en lien avec le procédé selon l'invention, le contre-cylindre principal 13 exerce ainsi ledit deuxième effort de compression de la nappe primaire 3 sur la surface du cylindre gaufreur 5 à travers ladite bande de compressions. De manière encore plus préférentielle, ledit contre-cylindre presseur principal 13 est confondu avec le cylindre de renvoi 9 de la bande de compression 6, de sorte à simplifier la conception et à limiter l'encombrement de l'installation 1. Alternativement, il pourra au contraire être distinct dudit cylindre de renvoi 8 et être par exemple agencé entre lesdits cylindre de renvoi 9 et cylindre d'amenée 8 (de préférence cependant plus près du cylindre de renvoi 9 que du cylindre d'amenée 8), en regard de la portion Pc du périmètre du cylindreur gaufreur 5 qui est recouverte par ladite bande de compression 6, et en contact avec cette dernière.

Optionnellement, le contre-cylindre presseur principal 13 est pourvu à sa surface d'un revêtement en matériau souple, par exemple en élastomère, de manière notamment à optimiser la largeur de la deuxième zone de compression formée entre le cylindre gaufreur 5 et le contre-cylindre presseur principal 13, et à favoriser une bonne transmission des efforts mécaniques.

De préférence, l'installation 1 comprend un deuxième dispositif (non illustré) de contrôle et de régulation de l'intensité dudit deuxième effort de compression, c'est-à-dire de la deuxième pression P2, exercé par ledit contre-cylindre presseur principal 13. Ledit deuxième dispositif de contrôle et de régulation peut être conçu soit pour créer et maintenir constant un écartement relatif prédéfini entre les surfaces respectives du cylindre gaufreur 5 et du contre-cylindre presseur principal 13, soit pour commander l'effort exercé par un vérin (ou autre, non illustré) sur l'axe dudit contre-cylindre presseur principal 13 à l'encontre dudit de la nappe primaire 3 et du cylindre gaufreur 5. Avantageusement, lesdits premier 10 et deuxième dispositifs de contrôle et de régulation de l'intensité respective des premier et deuxième efforts de compression sont distincts et sont conçus pour pouvoir être commandés de manière indépendante l'un de l'autre.

Optionnellement, ledit dispositif de gaufrage 4 pourra comprendre un contre-cylindre presseur, distinct du contre-cylindre presseur principal 13 qui est destiné à l'exercice du deuxième effort de compression évoqué ci-avant, et est positionné en amont dudit contact surfacique, c'est-à-dire en amont dudit cylindre gaufreur 5 et de la première zone de compression formée entre la bande de compression 6 et le cylindre gaufreur 5. Ce contre-cylindre presseur optionnel est préférentiellement conçu et agencé pour exercer un effort de pré-compression, correspondant avantageusement à une pression P3 prédéfinie, de ladite nappe primaire 3 entre ledit cylindre gaufreur 5 et ledit contre-cylindre presseur optionnel. Avantageusement, ce contre-cylindre presseur est destiné à permettre la mise en oeuvre de l'étape de pré-compression du procédé selon l'invention. De préférence, ce contre-cylindre presseur est alors conçu pour exercer ledit effort de pré-compression selon une direction normale à ladite nappe primaire 3.

De préférence, ledit contre-cylindre presseur optionnel est agencé pour exercer ledit effort de pré-compression de ladite nappe primaire 3 entre le cylindre gaufreur 5 et le contre-cylindre presseur, ladite bande de compression 6 étant interposée entre le cylindre gaufreur 5 et le contre-cylindre presseur. Le contre-cylindre presseur exerce ainsi ledit effort de pré-compression de la nappe primaire 3 sur la surface du cylindre gaufreur 5 à travers ladite bande de compression 6. De manière encore plus préférentielle, ledit contre-cylindre presseur est confondu avec le cylindre d'amenée 8 de la bande de compression 6, de sorte à simplifier la conception et à limiter l'encombrement de l'installation 1. Il constituera alors avantageusement un contre-cylindre d'entrée.

Optionnellement, le contre-cylindre presseur optionnel est pourvu à sa surface d'un revêtement en matériau souple, par exemple en élastomère, de manière notamment à optimiser la largeur de la zone de pré-compression formée entre le cylindre gaufreur 5 et le contre-cylindre presseur, et à favoriser une bonne transmission des efforts mécaniques.

De préférence, l'installation 1 comprend un dispositif de chauffage 14 de ladite bande de compression 6, qui est positionné derrière ladite bande de compression 6, en regard de ladite portion Pc de périmètre du cylindre gaufreur 5, autour de laquelle est enroulée la bande de compression 6. De préférence, le dispositif de chauffage 14 de ladite bande de compression 6 est pourvu d'un système de contrôle et de régulation de température.

Tel qu'illustré, ledit dispositif de chauffage 14 comprend avantageusement une pluralité d'éléments chauffants 14A, 14B, 14C distincts, de préférence de type chauffages radiants à infrarouges moyens. De manière particulièrement avantageuse, lesdits éléments chauffants 14A, 14B, 14C sont conçus pour pouvoir être commandés de manière indépendante les uns des autres, de sorte à assurer une parfaite maîtrise de la température de la bande de compression 6. A ce titre, lesdits éléments chauffants 14A, 14B, 14C sont avantageusement chacun pourvus de leur propre système de contrôle et de régulation de température (non illustré).De préférence, l'installation 1 de l'invention comprend un dispositif de préchauffage 15 de ladite bande de compression 6. Ledit dispositif de préchauffage 15 est préférentiellement agencé en amont du cylindre gaufreur 5 (en considération du sens de défilement de la bande de compression 6), avantageusement à proximité immédiate de ce dernier. Ledit dispositif de préchauffage 15 de la bande de compression 6 peut être de tout type connu, tel que par exemple de type premier dispositif radiant 16. De préférence, ledit dispositif de préchauffage 15 de ladite bande de compression 6 est pourvu d'un système de contrôle et de régulation de température.

Avantageusement, l'installation 1 comprend un dispositif de préchauffage 17 de ladite nappe primaire 3. Ledit dispositif de préchauffage 17 est de préférence agencé en amont du cylindre gaufreur 5 (en considération du sens de défilement de la bande de compression 6), avantageusement à proximité immédiate de ce dernier de manière à favoriser au maximum la continuité de l'apport thermique à la nappe primaire 3, et en regard de la face endroit 3A et 1 ou de la face envers 3B de la nappe primaire 3 (figure 1). Ledit dispositif de préchauffage de la nappe primaire 3 peut être de tout type connu, tel que par exemple de type deuxième dispositif radiant 18. De préférence, ledit dispositif de préchauffage 17 de la nappe primaire 3 est pourvu d'un système de contrôle et de régulation de température.

Par exemple, ledit dispositif de préchauffage 17 de la nappe primaire 3 pourra comprendre un ou plusieurs chauffages radiants infrarouges, agencés en regard de la face endroit 3A et / ou de la face envers 3B de la nappe primaire 3, et de préférence positionnés immédiatement en amont du cylindre d'amenée 8 de la bande de compression 6.

En définitive, les procédé et installation selon l'invention permettent la fabrication en continu, rapide, répétable et efficace de nappes gaufrées présentant un excellent effet de gaufrage, et ce à partir de nappes thermoformables de fortes épaisseurs (supérieures à 1 mm) et de nature et composition très variées. Les nappes gaufrées obtenues présentent un excellent état de surface et un motif gaufré particulièrement profond et bien défini.

Constitue par ailleurs une invention en tant que telle, indépendamment de la mise en oeuvre des autres caractéristiques décrites ici, un procédé de fabrication en continu d'une nappe gaufrée 2 à partir d'une nappe primaire 3 préexistante, par exemple d'épaisseur supérieure à 1 mm, présentant une face endroit 3A et une face envers 3B opposée, ladite nappe primaire 3 étant une nappe multicouche comprenant au moins une couche en matériau thermoformable et au moins une couche textile (par exemple tissée ou non tissée, thermoformable ou non), dans lequel on soumet ladite nappe primaire 3 à une opération de gaufrage de ladite face endroit 3A à l'aide d'un cylindre gaufreur 5 chauffé, ladite opération de gaufrage comprenant au moins une première étape de compression de ladite face endroit 3A de la nappe primaire 3 en contact avec la surface dudit cylindre gaufreur 5 chauffé sur au moins une portion Pc du périmètre de ce dernier à l'aide d'une bande de compression 6 en contact surfacique avec ladite face envers 3B de la nappe primaire 3.

Il s'avère en effet que le recours à une étape de compression d'une nappe primaire formée par un complexe matériau thermoformable / textile (par exemple un complexe mousse / textile), en contact avec la surface d'un cylindre gaufreur chauffé, à l'aide spécifiquement d'une bande de compression en contact surfacique avec l'une des faces dudit complexe, permet d'obtenir en continu et à cadence élevée un gaufrage particulièrement profond, efficace et précis, sans détérioration du complexe, en dépit de la nature composite spécifique de ce dernier, y compris lorsqu'il présente une épaisseur importante.

Particulièrement apte au traitement de nappes primaires de fortes épaisseurs, de nature et de composition très variées, l'installation selon l'invention est en outre d'un encombrement particulièrement maîtrisé et d'une maintenance relativement aisée.

Une nappe gaufrée, fabriquée à l'aide d'un procédé et / ou d'une installation conformes à l'invention, trouvera notamment application dans les domaines des revêtements de sièges pour les transports (automobile, etc.), de l'ameublement, des systèmes d'isolation phonique et thermique, ou encore dans le domaine des revêtements décoratifs muraux.

### POSSIBILITE D'APPLICATION INDUSTRIELLE

L'invention trouve son application industrielle dans les procédés et installations de fabrication en continu de nappes gaufrées.

## Revendications

1. Procédé de fabrication en continu d'une nappe gaufrée (2) à partir d'une nappe primaire (3) préexistante d'une épaisseur supérieure à 1 mm, ladite nappe primaire (3) comprenant au moins une couche en matériau thermoformable et présentant une face endroit (3A) et une face envers (3B) opposée, dans lequel on soumet ladite nappe primaire (3) à une opération de gaufrage de ladite face endroit (3A) à l'aide d'un cylindre gaufreur (5) chauffé, ladite opération de gaufrage comprenant au moins une première étape de compression de ladite face endroit (3A) de la nappe primaire (3) en contact avec la surface dudit cylindre gaufreur (5) chauffé sur au moins une portion (Pc) du périmètre de ce dernier à l'aide d'une bande de compression (6) en contact surfacique avec ladite face envers (3B) de la nappe primaire (3), ledit procédé étant **caractérisé en ce que** ladite opération de gaufrage comprend une deuxième étape de compression de ladite nappe primaire (3) entre ledit cylindre gaufreur (5) et un contre-cylindre presseur principal (13), ladite deuxième étape de compression étant immédiatement consécutive à ladite première étape de compression, lesdites première et deuxièmes étapes de compression étant respectivement réalisées à une première pression (P1) et à une deuxième pression (P2) prédéfinies, ladite deuxième pression (P2) étant supérieure ou égale à ladite première pression (P1).

2. Procédé selon la revendication précédente, **caractérisé en ce que** ladite première étape de compression est réalisée sur une durée au moins égale à 1 s, et de préférence supérieure ou égale à 5 s.

3. Procédé selon la revendication 1 ou 2, **caractérisé en ce que**, au cours de ladite deuxième étape de compression, ladite bande de compression (6) est interposée entre ledit cylindre gaufreur (5) et ledit contre-cylindre presseur principal (13).

4. Procédé selon l'une quelconque des revendications précédentes, **caractérisé en ce que** ladite deuxième pression (P2) est strictement supérieure à ladite première pression (P1).

5. Procédé selon l'une quelconque des revendications précédentes, **caractérisé en ce que** ledit matériau thermoformable est une mousse ou un matériau non-tissé, aiguilleté ou non.

6. Procédé selon l'une quelconque des revendications précédentes, **caractérisé en ce que** ladite nappe primaire (3) est une nappe multicouche, ladite nappe primaire (3) comprenant de préférence, outre ladite couche en matériau thermoformable, au moins une couche textile, par exemple tissée ou non tissée.

7. Procédé selon l'une quelconque des revendications précédentes, **caractérisé en ce qu'**il comprend une étape de chauffage de ladite bande de compression (6) pour assurer, au cours de ladite première étape de compression, un apport thermique à ladite nappe primaire (3) par ladite face envers (3B) par l'intermédiaire de ladite bande de compression (6), ladite étape de chauffage de ladite bande de compression (6) étant de préférence réalisée à l'aide d'un dispositif de chauffage (14) positionné derrière ladite bande de compression (6), en regard de ladite portion (Pc) de périmètre du cylindre gaufreur (5).

8. Procédé selon l'une quelconque des revendications précédentes, **caractérisé en ce qu'**il comprend, avant ladite première étape de compression, une étape de préchauffage de ladite nappe primaire (3).

9. Installation (1) de fabrication en continu d'une nappe gaufrée (2) à partir d'une nappe primaire (3) préexistante d'une épaisseur supérieure à 1 mm, ladite nappe primaire (3) comprenant au moins une couche en matériau thermoformable et présentant une face endroit (3A) et une face envers (3B) opposée, ladite installation (1) comprenant un dispositif de gaufrage (4) de ladite face endroit (3) à l'aide d'un cylindre gaufreur (5) chauffé, ledit dispositif de gaufrage (4) comprenant une bande de compression (6) conçue et agencée pour venir en contact surfacique avec ladite face envers (3B) de la nappe primaire (3) et exercer un premier effort de compression, correspondant à une première pression (P1) prédéfinie, de ladite face endroit (3A) en contact avec la surface dudit cylindre gaufreur (5) chauffé sur au moins une portion (Pc) du périmètre de ce dernier, ladite installation (1) étant **caractérisée en ce que** ledit dispositif de gaufrage (4) comprend un contre-cylindre presseur principal (13) positionné en aval dudit contact surfacique et conçu et agencé pour exercer un deuxième effort de compression, correspondant à une deuxième pression (P2) prédéfinie, de ladite nappe primaire (3) entre ledit cylindre gaufreur (5) et ledit contre-cylindre presseur principal (13), ladite deuxième pression (P2) étant supérieure ou égale à ladite première pression (P1).

10. Installation (1) selon la revendication précédente, **caractérisée en ce que** ladite bande de compression (6) est agencée en regard dudit cylindre gaufreur (5) et suit le contour de ce dernier sur au moins le quart, et de préférence sur les trois-quarts, du périmètre dudit cylindre gaufreur (5).

11. Installation (1) selon l'une quelconque des revendications 9 et 10, **caractérisée en ce qu'**il comprend un premier dispositif de contrôle et de régulation (10) de l'intensité dudit premier effort de compression.

12. Installation (1) selon l'une quelconque des revendications 9 à 11, **caractérisée en ce qu'**elle comprend un deuxième dispositif de contrôle et de régulation de l'intensité dudit deuxième effort de compression.

13. Installation (1) selon l'une quelconque des revendications 9 à 12, **caractérisée en ce que** ledit contre-cylindre presseur principal (13) est agencé pour exercer ledit deuxième effort de compression de ladite nappe primaire (3) entre ledit cylindre gaufreur (5) et ledit contre-cylindre presseur principal (13), ladite bande de compression (6) étant interposée entre ledit cylindre gaufreur (5) et ledit contre-cylindre presseur principal (13).

14. Installation (1) selon l'une quelconque des revendications 9 à 13, **caractérisée en ce qu'**elle comprend un dispositif de chauffage (14) de ladite bande de compression (6), qui est positionné derrière ladite bande de compression (6), en regard de ladite portion (Pc) de périmètre du cylindre gaufreur (5).

15. Installation (1) selon l'une quelconque des revendications 9 à 14, **caractérisée en ce qu'**elle comprend un dispositif de préchauffage (17) de ladite nappe primaire (3) qui est agencé en amont dudit cylindre gaufreur (5).

## Patentansprüche

1. Verfahren zur kontinuierlichen Herstellung einer geprägten Bahn (2) ausgehend von einer bereits vorhandenen Primärbahn (3) mit einer Dicke von mehr als 1 mm, wobei die Primärbahn (3) mindestens eine Schicht aus thermoformbarem Material umfasst und eine Vorderseite (3A) und eine gegenüberliegende Rückseite (3B) aufweist, bei dem die Primärbahn (3) einem Prägevorgang der Vorderseite (3A) mit Hilfe eines beheizten Prägezylinders (5) unterzogen wird, wobei der Prägevorgang mindestens einen ersten Kompressionsschritt der Vorderseite (3A) der Primärbahn (3) in Kontakt mit der Oberfläche des beheizten Prägezylinders (5) über mindestens einen Abschnitt (Pc) des Umfangs des letzteren mit Hilfe eines Kompressionsbandes (6) in Flächenkontakt mit der Rückseite (3B) der Primärbahn (3) umfasst, wobei das Verfahren **dadurch gekennzeichnet ist, dass** der Prägevorgang einen zweiten Kompressionsschritt der Primärbahn (3) zwischen dem Prägezylinder (5) und einem Hauptgegenpresszylinder (13) umfasst, wobei der zweite Kompressionsschritt unmittelbar auf den ersten Kompressionsschritt folgt, wobei der erste und der zweite Kompressionsschritt jeweils bei einem ersten Druck (P1) und einem zweiten Druck (P2) durchgeführt werden, die vordefiniert sind, wobei der zweite Druck (P2) größer als der erste Druck (P1) oder gleich diesem ist.

2. Verfahren nach dem vorhergehenden Anspruch, **dadurch gekennzeichnet, dass** der erste Kompressionsschritt über eine Dauer von mindestens 1 s und vorzugsweise größer oder gleich 5 s durchgeführt wird.

3. Verfahren nach Anspruch 1 oder 2, **dadurch gekennzeichnet, dass** während des zweiten Kompressionsschritts das Kompressionsband (6) zwischen dem Prägezylinder (5) und dem Hauptgegenpresszylinder (13) angeordnet ist.

4. Verfahren nach einem der vorhergehenden Ansprüche, **dadurch gekennzeichnet, dass** der zweite Druck (P2) strikt höher ist als der erste Druck (P1).

5. Verfahren nach einem der vorhergehenden Ansprüche, **dadurch gekennzeichnet, dass** das thermoformbare Material ein Schaumstoff oder ein Vliesmaterial, vernadelt oder nicht, ist.

6. Verfahren nach einem der vorhergehenden Ansprüche, **dadurch gekennzeichnet, dass** die Primärbahn (3) eine Mehrschichtbahn ist, wobei die Primärbahn (3) vorzugsweise neben der Schicht aus thermoformbarem Material mindestens eine Textilschicht, z. B. gewebt oder nicht gewebt, umfasst.

7. Verfahren nach einem der vorhergehenden Ansprüche, **dadurch gekennzeichnet, dass** es einen Schritt des Erwärmens des Kompressionsbandes (6) umfasst, um während des ersten Kompressionsschritts eine Wärmezufuhr zu der Primärbahn (3) von der Rückseite (3B) über das Kompressionsband (6) zu gewährleisten, wobei der Schritt des Erwärmens des Kompressionsbandes (6) vorzugsweise mit Hilfe einer Heizvorrichtung (14) durchgeführt wird, die hinter dem Kompressionsband (6) gegenüber dem Abschnitt (Pc) des Umfangs des Prägezylinders (5) positioniert ist.

8. Verfahren nach einem der vorhergehenden Ansprüche, **dadurch gekennzeichnet, dass** es vor dem ersten Kompressionsschritt einen Schritt zum Vorwärmen der Primärbahn (3) umfasst.

9. Anlage (1) zur kontinuierlichen Herstellung einer geprägten Bahn (2) aus einer bereits vorhandenen Primärbahn (3) mit einer Dicke von mehr als 1 mm, wobei die Primärbahn (3) mindestens eine Schicht aus thermoformbarem Material umfasst und eine Vorderseite (3A) und eine gegenüberliegende Rückseite (3B) aufweist, die Anlage (1) eine Vorrichtung (4) zum Prägen der Vorderseite (3) mit Hilfe eines beheizten Prägezylinders (5) umfasst, wobei die Prägevorrichtung (4) ein Kompressionsband (6) umfasst, das so konzipiert und angeordnet ist, dass es in Flächenkontakt mit der Rückseite (3B) der Primärbahn (3) kommt und eine erste Kompressionskraft, entsprechend einem ersten vordefinierten Druck (P1), auf die Vorderseite (3A) in Kontakt mit der Oberfläche des beheizten Prägezylinders (5) über mindestens einen Teil (Pc) des Umfangs des letzteren ausübt, wobei die Anlage (1) **dadurch gekennzeichnet ist, dass** die Prägevorrichtung (4) einen Hauptgegenpresszylinder (13) umfasst, der stromabwärts des besagten Flächenkontakts positioniert und so konzipiert und angeordnet ist, dass er eine zweite Kompressionskraft ausübt, entsprechend einem vordefinierten zweiten Druck (P2), der Primärbahn (3) zwischen dem Prägezylinder (5) und dem Hauptgegenpresszylinder (13), wobei der zweite Druck (P2) größer oder gleich dem ersten Druck (P1) ist.

10. Anlage (1) nach dem vorhergehenden Anspruch, **dadurch gekennzeichnet, dass** das Kompressionsband (6) gegenüber dem Prägezylinder (5) angeordnet ist und der Kontur des Prägezylinders (5) über mindestens ein Viertel, vorzugsweise über drei Viertel, des Umfangs des Prägezylinders (5) folgt.

11. Anlage (1) nach einem der Ansprüche 9 oder 10, **dadurch gekennzeichnet, dass** sie eine erste Vorrichtung (10) zur Kontrolle und Regelung der Intensität der ersten Kompressionskraft umfasst.

12. Anlage (1) nach einem der Ansprüche 9 bis 11, **dadurch gekennzeichnet, dass** sie eine zweite Vorrichtung zur Kontrolle und Regelung der Intensität der zweiten Kompressionskraft umfasst.

13. Anlage (1) nach einem der Ansprüche 9 bis 12, **dadurch gekennzeichnet, dass** der Hauptgegenpresszylinder (13) so angeordnet ist, dass er die zweite Kompressionskraft der Primärbahn (3) zwischen dem Prägezylinder (5) und dem Hauptgegenpresszylinder (13) ausübt, wobei das Kompressionsband (6) zwischen dem Prägezylinder (5) und dem Hauptgegenpresszylinder (13) angeordnet ist.

14. Anlage (1) nach einem der Ansprüche 9 bis 13, **dadurch gekennzeichnet, dass** sie eine Heizvorrichtung (14) für das Kompressionsband (6) umfasst, die hinter dem Kompressionsband (6) gegenüber dem Abschnitt (Pc) des Umfangs des Prägezylinders (5) positioniert ist.

15. Anlage (1) nach einem der Ansprüche 9 bis 14, **dadurch gekennzeichnet, dass** sie eine Vorheizvorrichtung (17) für die Primärbahn (3) umfasst, die stromaufwärts des Prägezylinders (5) angeordnet ist.

## Claims

1. A method for the continuous manufacture of an embossed web (2) starting from a pre-existing primary web (3) with a thickness larger than 1 mm, said primary web (3) comprising at least one layer of a thermoformable material and having an upside face (3A) and an opposite underside face (3B), wherein said primary web (3) is subjected to an operation of embossing said upside face (3A) using a heated embossing roll (5), said embossing operation comprising at least one first step of compressing said upside face (3A) of the primary web (3) in contact with the surface of said heated embossing roll (5) over at least one portion (Pc) of the perimeter of the latter using a compression band (6) in surface contact with said underside face (3B) of the primary web (3), said method being **characterized in that** said embossing operation comprises a second step of compressing said primary web (3) between said embossing roll (5) and a main press counter-roll (13), said second compression step being immediately subsequent to said first compression step, said first and second compression steps being respectively carried out at predefined first pressure (P1) and second pressure (P2), said second pressure (P2) being higher than or equal to said first pressure (P1).

2. The manufacturing method according to the preceding claim, **characterized in that** said first compression step is carried out over a period at least equal to 1 s, and preferably longer than or equal to 5 s.

3. The manufacturing method according to claim 1 and 2, **characterized in that**, during said second compression step, said compression band (6) is interposed between said embossing roll (5) and said main press counter-roll (13).

4. The manufacturing method according to any one of the preceding claims, **characterized in that** said second pressure (P2) is strictly higher than said first pressure (P1).

5. The manufacturing method according to any one of the preceding claims, **characterized in that** said thermoformable material is a foam or a non-woven material, whether needle-punched or not.

6. The manufacturing method according to any one of the preceding claims, **characterized in that** said primary web (3) is a multi-layer web, said primary web (3) preferably comprising, besides said thermoformable material layer, at least one textile layer, for example woven or non-woven.

7. The manufacturing method according to any one of the preceding claims, **characterized in that** it comprises a step of heating said compression band (6) to ensure, during said first compression step, heat supply to said primary web (3) by said underside face (3B) via said compression band (6), said step of heating said compression band (6) being preferably carried out using a heating device (14) positioned behind said compression band (6), opposite said portion (Pc) of the perimeter of the embossing roll (5).

8. The manufacturing method according to any one of the preceding claims, **characterized in that** it comprises, prior to said first compression step, a step of pre-heating said primary web (3).

9. A plant (1) for the continuous manufacture of an embossed web (2) starting from a pre-existing primary web (3) with a thickness larger than 1 mm, said primary web (3) comprising at least one layer of a thermoformable material and having an upside face (3A) and an opposite underside face (3B), said plant (1) comprising a device (4) for embossing said upside face (3) using a heated embossing roll (5), said embossing device (4) comprising a compression band (6) designed and arranged so as to come into surface contact with said underside face (3B) of the primary web (3) and exert a first force, corresponding to a predefined first pressure (P1), for compressing said upside face (3A) in contact with the surface of said heated embossing roll (5) over at least one portion (Pc) of the perimeter of the latter, said plant (1) being **characterized in that** said embossing device (4) comprising a main press counter-roll (13) positioned downstream of said surface contact and designed and arranged so as to exert a second force, corresponding to a predefined second pressure (P2), for compressing said primary web (3) between said embossing roll (5) and said main press counter-roll (13), said second pressure (P2) being higher than or equal to said first pressure (P1).

10. The plant (1) according to the preceding claim, **characterized in that** said compression band (6) is arranged opposite said embossing roll (5) and follows the circumference of the latter over at least one-quarter, and preferably over three-quarters, of the perimeter of said embossing roll (5).

11. The plant (1) according to any one of claims 9 and 10, **characterized in that** it comprises a first device for monitoring and regulating (10) the magnitude of said first compressing force.

12. The plant (1) according to any one of claims 9 to 11, **characterized in that** it comprises a second device for monitoring and regulating the magnitude of said second compressing force.

13. The plant (1) according to any one of claims 9 to 12, **characterized in that** said main press counter-roll (13) is arranged so as to exert said second compressing force on said primary web (3) between said embossing roll (5) and said main press counter-roll (13), said compression band (6) being interposed between said embossing roll (5) and said main press counter-roll (13).

14. The plant (1) according to any one of claims 9 to 13, **characterized in that** it comprises a device (14) for heating said compression band (6), which is positioned behind said compression band (6), opposite said portion (Pc) of the perimeter of the embossing roll (5).

15. The plant (1) according to any one of claims 9 to 14, **characterized in that** it comprises a device (17) for pre-heating said primary web (3) which is arranged upstream of said embossing roll (5).
